# EUROPÄISCHE PATENTANMELDUNG

(11) **EP 0 774 818 A2**
(43) Veröffentlichungstag der Anmeldung: **21.05.1997**
(21) Anmeldenummer: 96810746.6
(22) Anmeldetag: 07.11.1996
(51) Int. Cl.: H02G 5/10

(54) **Anlage zur Übertragung elektrischer Energie mit mindestens einem unterirdisch verlegten, hochspannungsführenden Stromleiter**

(30) Priorität: 15.11.1995 DE 19542595
(71) Anmelder: ASEA BROWN BOVERI AG, 5400 Baden (CH)
(72) Erfinder: Moritz, Bertil, 72348 Västeras (SE)
(74) Vertreter: Kaiser, Helmut, Dr.

(57) **Zusammenfassung**

Die Anlage dient der Übertragung elektrischer Energie in Ballungszentren. Sie weist eine gasisolierte Leitung (1) mit mindestens einem in einem isoliergasgefüllten Rohr (101) angeordneten, hochspannungsführenden Stromleiter (8) auf. Die gasisolierte Leitung (1) enthält mindestens zwei unterirdisch verlegte Leitungsabschnitte (11, 12), welche an einer von aussen zugänglichen Montagestelle (5) miteinander in Wirkverbindung bringbar sind. Eine solche Anlage zeichnet sich durch hohe Verfügbarkeit aus, ist leicht zu warten und kann in einem Verfahren hergestellt werden, bei dem eine Beeinträchtigung der Infrastruktur des die Anlage aufnehmenden Ballungsraums weitgehend vermieden wird.

## Beschreibung

### TECHNISCHES GEBIET

Bei der Erfindung wird ausgegangen von einer Anlage zur Übertragung elektrischer Energie mit mindestens einem unterirdisch verlegten, hochspannungsführenden Stromleiter nach dem Oberbegriff von Patentanspruch 1. Die Erfindung betrifft auch ein Verfahren zur Herstellung einer solchen Anlage.

### STAND DER TECHNIK

Eine derartige Anlage wird bevorzugt in Ballungszentren eingesetzt und enthält üblicherweise im Erdreich verlegte Hochspannungskabel, welche elektrische Energie von Kraftwerken, Freileitungen oder Umspannanlagen zu Unterstationen führen, in denen Hochspannung von beispielsweise 110 kV auf Mittelspannung von beispielsweise 10, 20 oder 30 kV umgespannt wird. In rasch wachsenden städtischen Agglomerationen, insbesondere im asiatischen Raum, kann eine derartige Anlage nicht ohne erhebliche Beeinträchtigung der durch den Verkehr, die Wasser- und Gasversorgung sowie die Abwasserentsorgung bestimmten Infrastruktur erstellt oder erweitert werden. Dies vor allem deswegen, da beim Verlegen und Warten von Hochspannungskabeln im allgemeinen Gräben ausgehoben werden müssen, wodurch die Infrastruktur ganz erheblich gestört und in ihrer Leistungsfähigkeit wesentlich beeinträchtigt wird.

### KURZE DARSTELLUNG DER ERFINDUNG

Der Erfindung, wie sie in den Patentansprüchen 1 und 11 angegeben ist, liegt die Aufgabe zugrunde, eine Anlage der eingangs genannten Art zu schaffen, welche sich durch hohe Verfügbarkeit auszeichnet, leicht warten ist und sich gleichzeitig in einem Verfahren herstellen lässt, bei dessen Durchführung die Infrastruktur eines die Anlage aufnehmenden Ballungsraum höchstens geringfügig beeinträchtigt wird.

Die Anlage nach der Erfindung zeichnet sich dadurch aus, dass aufwendige und störanfällige Kabelverbindungen entfallen, und dass nur sehr geringe Blindleistungsverluste auftreten. Zudem können die einzelnen Leitungsabschnitte besonders wirkungsvoll gekühlt und so eine äusserst hohe Stromtragfähigkeit erreicht werden. Da die Anlage im allgemeinen mehrere Meter unter der Erdoberfläche verlegt ist, dringen elektromagnetische Störfelder praktisch kaum nach aussen und ist die Anlage zudem vor Vandalenakten weitgehend geschützt.

Von besonderem Vorteil ist es, dass die Anlage in einem Verfahren hergestellt werden kann, bei dem eine Störung der bereits vorhandenen Infrastruktur weitgehend vermieden wird. Das Aufreissen und Verlegen von Verkehrswegen, das Unterbrechen von bereits vorhandenen Rohrleitungen und Verkabelungen und das Ausheben von Kabelgräben und -schächten entfällt nahezu vollständig. Darüber hinaus können gegebenenfalls in einem einzigen Verfahren die Anlage nach der Erfindung und gleichzeitig auch weitere Komponenten der Infrastruktur, wie Abwasserrohre, erzeugt werden.

### KURZE BESCHREIBUNG DER ZEICHNUNGEN

Bevorzugte Ausführungsbeispiele der Erfindung und die damit erzielbaren weiteren Vorteile werden nachfolgend anhand von Zeichnungen näher erläutert. Hierbei zeigt:
- Fig.1: eine Prinzipschaltung einer als Ring ausgebildeten Ausführungsform einer Anlage nach der Erfindung mit einer unterirdisch verlegten gasisolierten Leitung und mit Montagestellen aufweisenden Unterstationen,
- Fig.2: in stark vereinfachter Darstellung einen zwei Abschnitte der gasisolierten Leitung und eine der Montagestellen aufweisenden Teil der Anlage nach Fig.1,
- Fig.3: in perspektivischer Ansicht einen Teil einer dreiphasig ausgebildeten gasisolierten Leitung im Bereich der Montagestelle gemäss Fig.2 und einer vorzugsweise Luft oder Wasser als Kühlmittel führenden Kühlvorrichtung,
- Fig.4: in perspektivischer Ansicht einen Teil einer mehrphasig ausgebildeten gasisolierten Leitung im Bereich der Montagestelle gemäss Fig.2 und einer Isoliergas aus zwei Phasen der gasisolierten Leitung als Kühlmittel führenden Kühlvorrichtung,
- Fig.5: in schematischer Darstellung eine Draufsicht auf eine dreiphasig ausgebildete gasisolierte Leitung und ein Zusatzrohr im Bereich der Montagestelle gemäss Fig.2, bei der je zwei Phasen der gasisolierten Leitung bzw. die dritte Phase der gasisolierten Leitung und das Zusatzrohr jeweils einer Kühlvorrichtung gemäss Fig.4 zugeordnet sind, und
- Fig.6: in schematischer Darstellung eine Draufsicht auf zwei jeweils dreiphasig ausgebildete gasisolierte Leitungen im Bereich der Montagestelle gemäss Fig.2, bei der je zwei Phasen der beiden gasisolierten Leitungen jeweils einer Kühlvorrichtung gemäss Fig.4 zugeordnet sind.

### WEGE ZUR AUSFÜHRUNG DER ERFINDUNG

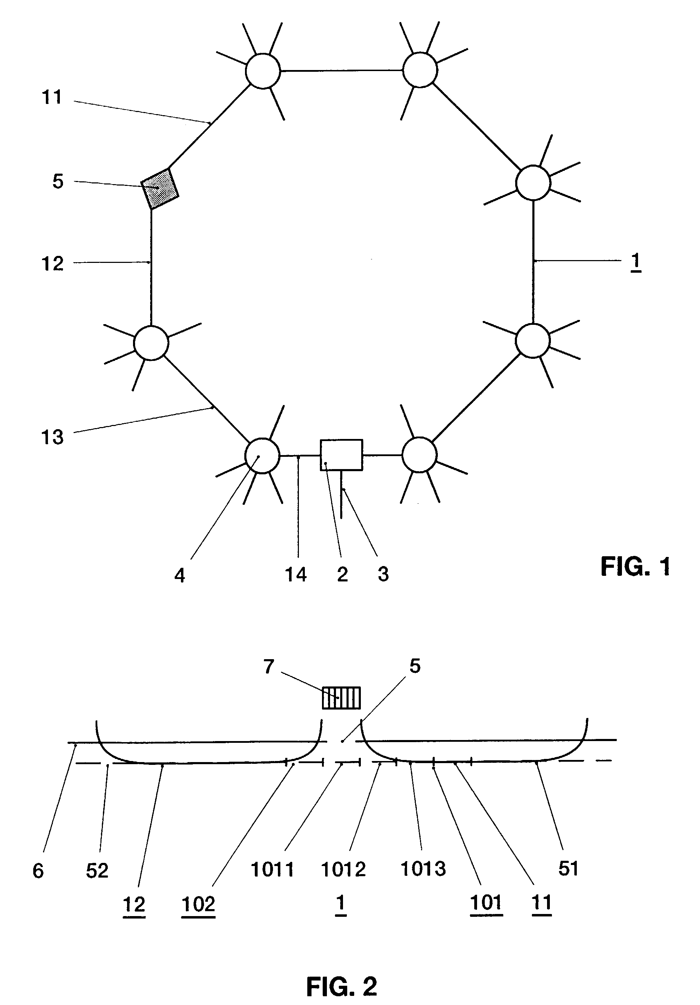

Bei allen Figuren beziehen sich gleiche Bezugszeichen auf gleichwirkende Teile. Die in Fig.1 dargestellte und als Ring ausgebildete Anlage nach der Erfindung weist eine unterirdisch verlegte gasisolierte Leitung 1 auf. In einer Unterstation 2 der Anlage wird von einer beispielsweise auf 400kV ausgelegten Höchstspannungsleitung 3 elektrische Energie abgenommen, auf eine Hochspannung von beispielsweise 110kV heruntertransformiert und in die auf diese Spannung ausgelegte gasisolierte Leitung 1 eingespeist. Die gasisolierte Leitung 1 weist unterirdisch verlegte Leitungsabschnitte auf, von denen aus Gründen der Übersichtlichkeit lediglich vier Leitungsabschnitte 11, 12, 13, 14 mit Bezugszeichen versehen sind. Je zwei aneinandergrenzende Leitungsabschnitte, beispielsweise die Leitungsabschnitte 11 und 12, sind von aussen zugänglich und miteinander in Wirkverbindung bringbar. Die Zugänglichkeit von aussen kann mit Vorteil an einem Netzknoten oder einer (eine Montagestelle aufweisenden) Unterstation 4, in der die in den Leitungsabschnitten 13 und 14 geführte Leitungsspannung von 110 kV auf eine Mittelspannung von typischerweise 10, 20 oder 30 kV heruntergespannt wird, vorgesehen sein, kann aber auch an einer Montagepersonal zugänglichen Stelle 5 angeordnet sein, an der zwei Leitungsabschnitte, beispielsweise die Leitungsabschnitt 11 und 12, miteinander direkt verbunden sind.

Aus Fig.2 ist die für die Anlage typische Anordnung der zwei Leitungsabschnitte 11 und 12 zu entnehmen. Ersichtlich sind die Leitungsabschnitte 11, 12 unter der Erdoberfläche 6 verlegt und an der Stelle 5 von aussen zugänglich. An der Stelle 5 ist auch eine Vorrichtung 7 zum Speisen mindestens eines der beiden Leitungsabschnitte 11, 12 mit Kühlmittel vorgesehen. Die Leitungsabschnitte 11, 12, 13, 14 sind typischerweise ca. 300 bis 500 m lang und sind im allgemeinen etwa 10 m unter der Erdoberfläche 6 vergraben. Eine negative Beeinflussung der Umgebung, insbesondere durch Austreten von elektromagnetischen Störfeldern, wird so mit Sicherheit vermieden.

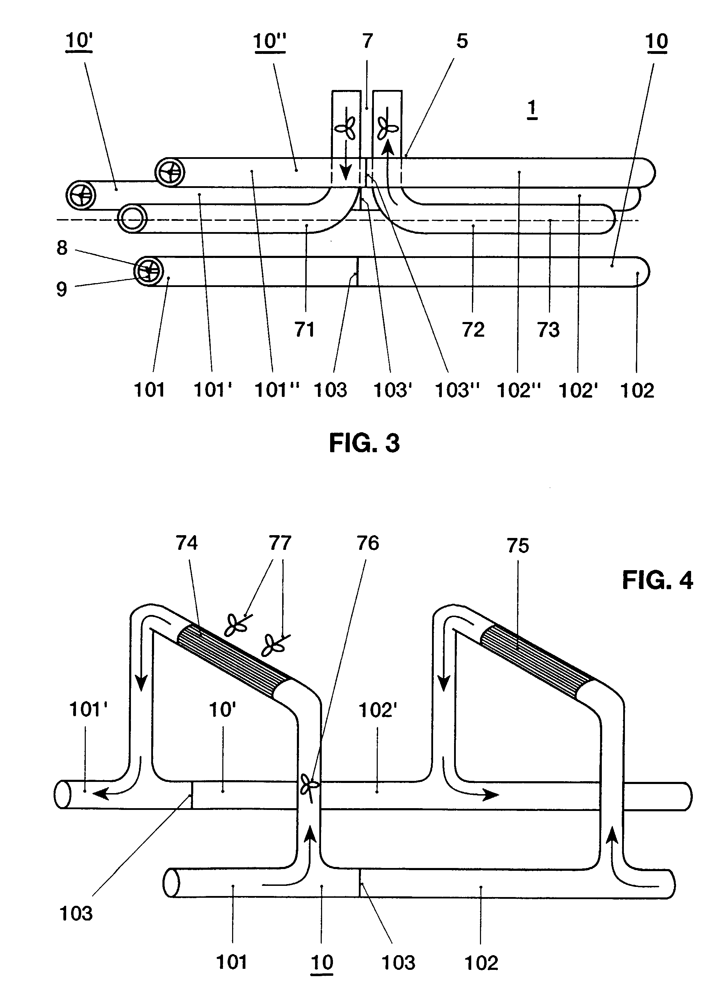

Die gasisolierte Leitung 1 kann ein- oder mehrphasig oder als Doppelleitung ausgebildet sein. In jedem Fall weist die Leitung 1 einen beispielsweise aus Fig.3 ersichtlichen Stromleiter 8 auf, welcher auf Isolierstützern 9 gelagert in einer Rohrleitung 10 angeordnet ist. Die Rohrleitung 10 ist mit einem Isoliergas, wie etwa SF₆, mit bis zu einigen bar Druck gefüllt und kann aus Metall, wie etwa Aluminium oder Stahl, oder aus gegebenenfalls leitfähig beschichtetem Kunststoff, wie etwa Polyäthylen, bestehen. Der Gasraum kann in einfacher Weise mit einem Drucksensor auf Dichtigkeit überwacht werden. Der Stromleiter 8 kann wie aus Fig.3 ersichtlich ist auf der Achse der Rohrleitung 10 angeordnet sein. Ist die gasisolierte Leitung 1 - wie in Fig.3 - dargestellt dreiphasig ausgebildet, so sind die den beiden anderen Phasen zugeordneten Stromleiter zentral in weiteren zueinander und zur Rohrleitung 10 parallel geführten Rohrleitungen 10' und 10'' angeordnet. Bei einem mehrphasigen, beispielsweise dreiphasigen, System können die Phasenleiter unter Beachtung der vorgeschriebenen Isolationsabstände auch in einer einzigen Rohrleitung angeordnet sein. Jede Rohrleitung 10 bzw. 10' bzw. 10'' ist aus Rohren 101, 102 bzw. 101', 102' bzw. 101'', 102'' zusammengesetzt, die an der Montagestelle 5 miteinander verbunden werden können. Schottungsisolatoren 103 bzw. 103' bzw. 103'' verhindern den Gasaustausch zwischen aneinandergrenzenden Rohren 101, 102 bzw. 101' 102' bzw. 101'', 102''.

Die an der Montagestelle vorgesehene Kühlvorrichtung 7 weist ein der Aufnahme von Kühlmittel, wie insbesondere Luft oder etwa Wasser, dienende, parallel zu den Rohrleitungen 10, 10' und 10'' geführte Rohre 71 und 72 auf. Die Rohre 71 und 72 liegen hintereinander auf einer gemeinsamen Achse 73 und sind annähernd in gleicher Entfernung von den vorzugsweise auf den Ecken eines gleichseitigen Dreiecks befindlichen Rohrleitungen 10, 10' und 10'' angeordnet. Die Rohrleitungen 10, 10', 10'' weisen typischerweise Durchmesser von 30 bis 50 cm auf. Ihr Abstand zueinander beträgt im allgemeinen 20 bis 100 cm. Im Bereich der Montagestelle 5 sind die Rohre 71 und 72 gekrümmt ausgebildet und sind hinter der Krümmung in vertikaler Richtung nach oben aus der Anlage geführt. In das Rohr 71 wird mit Hilfe eines nicht bezeichneten Fördermittels Kühlmittel, beispielsweise Luft, eingeblasen, welche an der nächsten Montagestelle aus dem Rohr mittels eines weiteren Fördermittels entfernt wird. Diese weitere Fördermittel entspricht dem am oberen Ende des Rohrs 72 dargestellten Fördermittel. Auf seinem Weg durch das Rohr 71 entzieht das Kühlmittel dem von den Phasenleitern aufgeheizten umgebenden Erdreich Wärme, welche an der Montagestelle unmittelbar an die Umgebung abgegeben wird. Die einzige für die Kühlfunktion benötigte Energie dient lediglich dem Betrieb der Fördermittel.

Die Rohrleitungen 10, 10' 10''und die Rohre 71 und 72 sind so bemessen, dass jede der Rohrleitungen auch der Führung des Kühlmittels und jedes der Rohre 71 und 72 auch der Aufnahme eines der Phasenstromleiter dienen kann. Ist beispielsweise eine der Phasen, etwa die in der Rohrleitung 10 vorgesehene Phase fehlerbehaftet, so können an der Montagestelle die Rohre 71 und 72 zusammengefügt und kann sodann unter Bildung einer fehlerfreien Phase in die so gebildete Rohrleitung ein auf Isolierstützern gelagerter Stromleiter eingeschoben werden. Die der fehlerhaften Phase zugeordnete Rohrleitung 10 wird dann entsprechend den Rohren 71 und 72 ausgebildet und dient dann der Führung des Kühlmittels. Zusätzlich kann gegebenenfalls parallel zu den Rohrleitungen 10, 10', 10'' ein Rückleiter geführt sein und/oder es können auch parallel geführte Phasenstromleiter einer einen zweiten Mehrphasenstrom führenden zweiten gasisolierten Leitung vorgesehen sein.

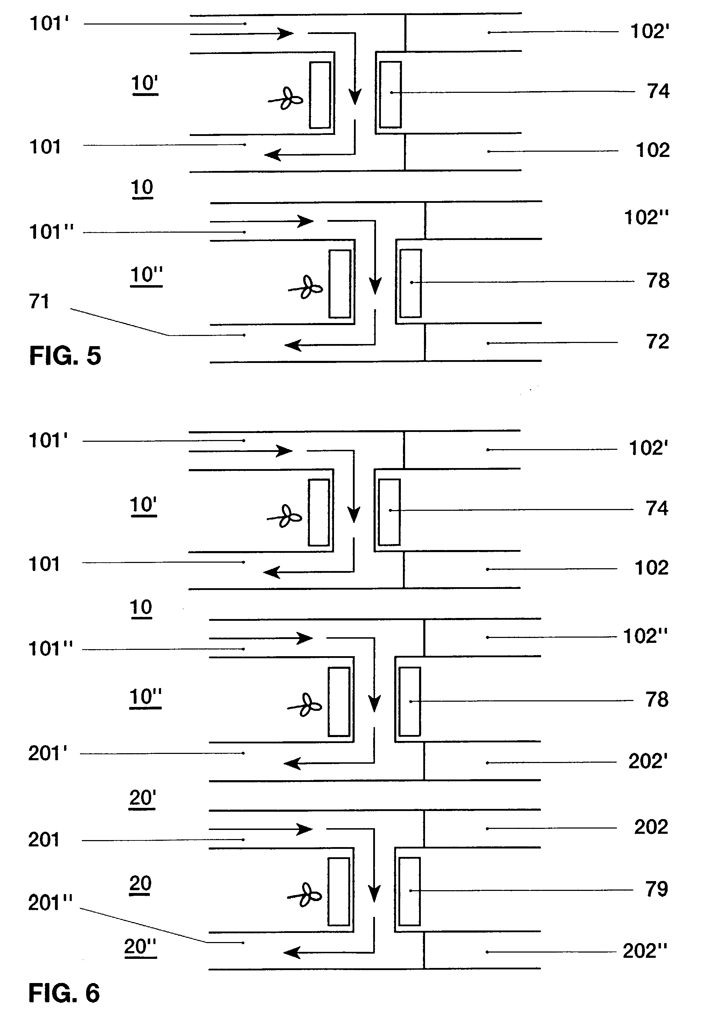

Anstelle eines offenen Kühlsystems mit Luft oder Wasser als Kühlmittel kann auch ein geschlossenes Kühlsystem eingesetzt werden mit dem in den Leitungsabschnitten 11, 12,... vorgesehenen Isoliergas. Ausführungsformen solcher Kühlsysteme sind aus den Figuren 4, 5 und 6 ersichtlich. Bei den genannten Ausführungsformen weist das Kühlsystem an der Montagestelle Wärmeaustauscher 74, 75 auf, welche jeweils über nicht bezeichnete vertikale Rohrabschnitte mit den zwei Phasenleitern zugeordneten Rohrleitungen, beispielsweise 10 und 10', verbunden sind. Erste Fördermittel 76 bewirken eine Zirkulation des Isoliergases vom Wärmeaustauscher 74 durch das Rohr 101' der Rohrleitung 10' zu einem bei der nicht dargestellten nächsten Montagestelle angeordneten Wärmeaustauscher, welcher dem Wärmeaustauscher 75 entspricht, und von dort durch das Rohr 101 der Rohrleitung 10 zurück zum Wärmeaustauscher 74 (vgl. die in Fig.4 eingetragenen Pfeile). Im Wärmeaustauscher 74 wird die bei der Zirkulation durch das Rohr 101 aufgenommene Wärme etwa mittels Gebläsen 77 entfernt. In entsprechender Weise wird in dem dem Wärmeaustauscher 75 entsprechenden nicht dargestellten Wärmeaustauscher die bei der Zirkulation durch das Rohr 101' aufgenommene Wärme entfernt.

Bei der Ausführungsform des geschlossenen Kühlsystems nach Fig.5 sind in Ergänzung zu Fig.4 zusätzlich noch die Rohre 71 und 72 sowie die einen dritten Phasenleiter aufnehmende und aus Rohren 101'' und 102'' zusammengesetzte Rohrleitung 10'' dargestellt. Bei dieser Kühlvorrichtung ist die die dritte Phase enthaltende Rohrleitung 10'' bzw. das Rohr 101'' mit dem Rohr 71 über einen Wärmeaustauscher 78 verbunden. Für die drei Phasen werden so pro Leitungsabschnitt, z.B. 11, zwei geschlossene Kühlkreisläufe benötigt, von denen der eine in den den beiden Phasen zugeordneten Rohren 101 und 101' und der andere in dem der dritten Phase zugeordneten Rohr 101'' und dem phasenfreien Rohr 71 geführt wird.

Mit der in Fig.6 dargestellten Ausführungsform des geschlossenen Kühlsystems nach Fig.4 soll eine als Doppelleitung ausgebildete Anlage nach der Erfindung mit jeweils drei Phasenleitern gekühlt werden. Die drei Phasenleiter der beiden Leitungen sind in Rohrleitungen 10, 10, 10'' bzw., 20, 20', 20'' mit den Rohren 101, 102, 101', 102,' 101'', 102'' bzw. 201, 202, 201', 202', 201'', 202'' angeordnet. Bei dieser Ausführungsform ist jeweils zwei Phasen ein geschlossener Kühlkreislauf mit einem Wärmeaustauscher 74, 78 bzw. 79 zugeordnet. Ein zusätzliches für Kühlzwecke vorgesehenes Rohr, wie das Rohr 71 bzw. 72, kann entfallen.

Unter Bezugnahme auf Fig.2 kann die Anlage nach der Erfindung in einfacher Weise dadurch hergestellt werden, dass vor der Herstellung der Wirkverbindung zwischen den zwei Leitungsabschnitten 11, 12, an der Montagestelle 5 mindestens zwei überwiegend horizontal geführte, unterirdische Kanäle 51, 52 gebohrt werden. Mindestens einer der beiden Leitungsabschnitte, etwa der Leitungsabschnitt 11, wird durch gasdichtes Verbinden von vergleichsweise kurzen, beispielsweise 8 - 10 m betragenden, Rohrabschnitten 1011, 1012, 1013 hergestellt. Hierbei werden etwa der Rohrabschnitt 1012 und in entsprechender Weise der mit diesem Abschnitt bereits gasdicht verbundene Rohrabschnitt 1013 so tief in den Kanal 51 hineingeschoben bis nur noch das der Montagestelle 5 zugewandte Ende des Rohrabschnitts 1012 an der Montagestelle 5 freiliegt. Der Rohrabschnitt 1011 wird sodann in gasdichter Weise mit dem zunächst noch freiliegenden Ende des Rohrabschnitts 1012 verbunden. Das so gebildete Rohr wird im Kanal 51 verschoben bis nurmehr das Ende des Rohrabschnitts 1011 freiliegt. Nachdem auf diese Weise das gesamte Rohr 101 des Leitungsabschnitts 11 gefertigt ist, wird in das verlegte Rohr der von gleitfähig ausgebildeten Isolierstützern gehaltene Stromleiter eingeschoben. An den Enden des dem Leitungsabschnitt, z.B.11, zugeordneten Rohrs, z. 101, sind Schottungsisolatoren, wie z.B. der Schottungsisolator 103 (Fig.3), montiert.

Alternativ können die in den vorgefertigten, unterirdischen Kanal eingeschobenen Rohrabschnitte vor dem gasdichten Verbinden bereits die von Isolierstützern gehaltenen Stromleiter aufnehmen.

Im allgemeinen kann der unterirdisch geführte Kanal 51 bzw. 52 durch Bohren hergestellt werden. Die Rohrabschnitte, z.B. 1012, können unter Ausübung von Druck in den Kanal 52 eingeschoben werden. Die Montagestelle 5 muss ausreichend gross bemessen sein, um die Rohrabschnitte an die Öffnungen der Kanäle 51, 52 führen und in die Kanäle einschieben zu können.

Die Kanäle 51, 52 müssen nicht gerade geführt sein, sie können auch - wie aus Fig.2 ersichtlich ist - teilweise gekrümmt ausgebildet sein. Die Bohrvorrichtung kann dann an der Erdoberfläche positioniert sein. Zunächst wird in diesem Fall ein Loch durch die Erdoberfläche gebohrt, welches zunächst im allgemeinen überwiegend vertikal geführt ist. Dem höchstens wenige Meter überwiegend vertikal geführten Abschnitt schliesst sich ein gekrümmt verlaufender Abschnitt von mehreren Metern an, welcher schliesslich in einen einige hundert Meter langen überwiegend horizontal verlaufenden Abschnitt übergeht. An diesen horizontal verlaufenden Abschnitt kann sich wieder ein gekrümmt ausgebildeter Abschnitt anschliessen, der durch die Erdoberfläche an eine aussenliegende Montagestelle 5 geführt wird, oder der horizontal verlaufende Abschnitt kann in eine unterirdisch angeordnete Montagestelle 5 münden, wie dies in Fig.2 gestrichelt dargestellt ist.

Es ist besonders vorteilhaft, wenn ein für einen anderen Zweck bereits verwendeter, unterirdisch geführte Kanal zur Aufnahme des Rohrs verwendet wird, da dann Bohrarbeiten vermieden werden. Von besonderem Vorteil ist es, wenn der Kanal mit einer stössdämpfenden Flüssigkeit, wie etwa Abwasser, gefüllt ist. Das Abwasser lagert das Rohr stossdämpfend. Durch Erdbeben hervorgerufenen seismische Kräfte werden von dem allseits das Rohr umgebende Abwasser aufgenommen, so dass keine radialen Kräfte auf das Rohr ausgeübt werden. Da sich das Abwasser auf Erdpotential befindet, ist das den Stromleiter aufnehmende Rohr stets auf einem definierten Potential gehalten.

### Bezugszeichenliste

- 1: gasisolierte Leitung
- 2: Unterstation
- 3: Hochspannungsleitung
- 4: Unterstation
- 5: Montagestelle
- 6: Erdoberfläche
- 7: Kühlvorrichtung
- 8: Stromleiter
- 9: Isolierstützer
- 10, 10', 10'': Rohrleitungen
- 11, 12, 13, 14: Leitungsabschnitte
- 51, 52: unterirdische Kanäle
- 71, 72: Rohre
- 73: Achse
- 74, 75,: Wärmeaustauscher
- 76, 77: Fördermittel
- 78, 79: Wärmeaustauscher
- 101, 102, 101', 102,' 102'',102'', 201, 202, 201', 202', 201'', 202'': Rohre
- 103, 103', 103'': Schottungsisolatoren

## Patentansprüche

1. Anlage zur Übertragung elektrischer Energie mit mindestens einem unterirdisch verlegten, hochspannungsführenden Stromleiter (8), dadurch gekennzeichnet, dass der mindestens eine Stromleiter (8) unter Bildung einer gasisolierten Leitung (1) in einem isoliergasgefüllten Rohr (101) angeordnet ist, und dass die gasisolierte Leitung (1) mindestens zwei unterirdisch verlegte Leitungsabschnitte (11, 12) aufweist, welche an einer von aussen zugänglichen Montagestelle (5) miteinander in Wirkverbindung bringbar sind.

2. Anlage nach Anspruch 1, dadurch gekennzeichnet, dass die Montagestelle ein Netzknoten oder eine Unterstation ist.

3. Anlage nach einem der Ansprüche 1 oder 2, dadurch gekennzeichnet, dass die Montagestelle eine elektrische Verbindung der beiden Leitungsabschnitte (11, 12) enthält.

4. Anlage nach einem der Ansprüche 1 bis 3, dadurch gekennzeichnet, dass die Montagestelle (5) eine Vorrichtung (7) zum Speisen mindestens eines der beiden Leitungsabschnitte (11, 12) mit Kühlmittel aufweist.

5. Anlage nach Anspruch 4, dadurch gekennzeichnet, dass bei einer Mehrphasenstrom führenden Anlage jeder Phasenstromleiter (8) einer ersten gasisolierten Leitung (1) jeweils in einem isoliergasgefüllten Rohr (101, 102, 101', 102', 101'', 102'') angeordnet ist, dass die den Phasen zugeordneten Rohre zueinander parallel geführt sind, und dass neben diesen Rohren gegebenenfalls ein der Aufnahme des Kühlmittels dienendes, parallel dazu geführtes Rohr (71, 72) und/oder gegebenenfalls ein parallel dazu geführter Rückleiter und/oder gegebenenfalls parallel dazu geführte und Phasenstromleiter einer zweiten gasisolierten Leitung aufnehmende Rohre (201, 202, 201', 202', 201'', 202'') vorgesehen sind.

6. Anlage nach Anspruch 5, dadurch gekennzeichnet, dass das der Aufnahme des Kühlmittels dienende Rohr (71, 72) annähernd gleichweit von den Rohren (101, 102, 101', 102', 101'', 102'') der Phasenstromleiter (8) angeordnet ist.

7. Anlage nach einem der Ansprüche 5 oder 6, dadurch gekennzeichnet, dass das Kühlmittel Luft oder Wasser ist.

8. Anlage nach einem der Ansprüche 5 oder 6, dadurch gekennzeichnet, dass die zwei Phasenstromleitern zugeordneten Rohre (101, 101') oder das einem der Phasenstromleiter (101") zugeordnete Rohr und das Kühlmittel führende Rohr (71) an der Montagestelle (5) über mindestens einen Wärmeaustauscher (74, 78) miteinander verbunden sind.

9. Anlage nach Anspruch 8, dadurch gekennzeichnet, dass das Kühlmittel das in den Rohren (101, 101', 101'') vorgesehene Isoliergas ist.

10. Anlage nach einem der Ansprüche 5 bis 9, dadurch gekennzeichnet, dass die Rohre (101, 101', 101'') der Phasenstromleiter (8) und das Kühlmittel führende Rohr (71) derart bemessen sind, dass jedes der Rohre der Phasenstromleiter der Führung des Kühlmittels und das Kühlmittel führende Rohr der Aufnahme eines der Phasenstromleiter dienen kann.

11. Verfahren zur Herstellung einer Anlage nach einem der Ansprüche 1 bis 10, bei dem die mindestens zwei unterirdisch verlegten Leiterabschnitte (11, 12) an der Montagestelle (5) miteinander in Wirkverbindung gebracht werden, dadurch gekennzeichnet, dass vor der Herstellung der Wirkverbindung an der Montagestelle (5) mindestens zwei überwiegend horizontal geführte, unterirdische Kanäle (51, 52) gefertigt werden, dass mindestens einer (11) der mindestens zwei Leitungsabschnitte (11, 12) durch gasdichtes Verbinden von Rohrabschnitten (1011, 1012, 1013) hergestellt wird, von denen ein erster Rohrabschnitt (1012) in einen (51) der mindestens zwei Känäle (51, 52) eingeschoben und ein zweiter Rohrabschnitt (1011) in gasdichter Weise mit dem noch freiliegenden Ende des ersten Rohrabschnitts (1012) verbunden wird, und das so gebildete Rohr (101) im Kanal (51) solange verschoben wird, bis nurmehr das Ende des zweiten Rohrabschnitts (1011) an der Montagestelle (5) freiliegt.

12. Verfahren nach Anspruch 11, dadurch gekennzeichnet, dass in das solchermassen gefertigte und verlegte Rohr (101) der von gleitfähig ausgebildeten Isolierstützern (9) gehaltene Stromleiter (8) eingeschoben wird.

13. Verfahren nach Anspruch 11, dadurch gekennzeichnet, dass die in den vorgefertigten, unterirdischen Kanal (51) eingeschobenen Rohrabschnitte (1011, 1012) vor dem gasdichten Verbinden bereits den von Isolierstützern (9) gehaltenen Stromleiter (8) aufnehmen.

14. Verfahren nach einem der Ansprüche 11 bis 13, dadurch gekennzeichnet, dass der unterirdisch geführte Kanal (51) durch Bohren hergestellt wird.

15. Verfahren nach Anspruch 14, dadurch gekennzeichnet, dass das Bohren oberirdisch ausgeführt wird, dass beim Bohren zunächst ein durch die Erdoberfläche geführter, zumindest teilweise gekrümmt ausgebildeten Abschnitt des Kanals (51) hergestellt wird, und dass im Anschluss an diesen gekrümmt ausgebildeten Abschnitt des Kanals (51) ein überwiegend horizontal geführter Kanal gebohrt wird.

16. Verfahren nach Anspruch 15, dadurch gekennzeichnet, dass der überwiegend horizontal geführte Abschnitt in eine unterirdische Montagestelle (5) geführt wird.

17. Verfahren nach Anspruch 14, dadurch gekennzeichnet, dass das Bohren von einer unterirdisch angeordneten Montagestelle (5) aus durchgeführt wird.

18. Verfahren nach einem der Ansprüche 11 bis 13, dadurch gekennzeichnet, dass der unterirdisch geführte Kanal (51) von einem für einen anderen Zweck bereits vorhandenen Rohr, gebildet wird.

19. Verfahren nach Anspruch 18, dadurch gekennzeichnet, dass der unterirdisch geführte Kanal (51) ein mit einer stössdämpfenden Flüssigkeit gefülltes Abwasserrohr ist.
